Europäisches Patentamt

European Patent Office

Office européen des brevets

(11) Publication number: **0 188 455**
**B1**

# EUROPEAN PATENT SPECIFICATION

(45) Date of publication of patent specification: **11.05.88**

(21) Application number: **85902994.4**

(22) Date of filing: **14.06.85**

(51) Int. Cl.⁴: **B 60 K 31/00,** G 05 D 13/62

(86) International application number:
**PCT/FI85/00054**

(87) International publication number:
**WO 86/00049 03.01.86 Gazette 86/01**

(54) **CONSTANT-SPEED REGULATOR FOR MOTOR VEHICLES.**

(30) Priority: **14.06.84 FI 842414**

(43) Date of publication of application:
**30.07.86 Bulletin 86/31**

(45) Publication of the grant of the patent:
**11.05.88 Bulletin 88/19**

(84) Designated Contracting States:
**AT BE CH DE FR GB IT LI LU NL SE**

(56) References cited:
**EP-A-0 005 994**
**DE-A-2 819 175**
**GB-A-2 136 164**
**SE-B- 427 969**
**US-A-3 949 359**
**US-A-3 952 829**
**US-A-4 181 943**

(73) Proprietor: **OY SAAB-VALMET AB**
**PL 4**
**SF-23510 Uusikaupunki (FI)**

(72) Inventor: **HONKANIEMI, Jyrki**
**Ilomäentie 1 B**
**SF-00840 Helsinki (FI)**

(74) Representative: **Rostovanyi, Peter et al**
**AWAPATENT AB Box 5117**
**S-200 71 Malmö (SE)**

Courier Press, Leamington Spa, England.

## Description

The invention is concerned with a constant-speed regulator for motor vehicles for keeping the speed of the vehicle at the desired level, which said constant-speed regulator comprises a selector device for selecting the desired constant speed, a programmable central unit which memory unit, into which the data are fed concerning the driving situation, such as the use of the clutch and of the brake as well as the momentary speed, and regulating devices controlled by the central unit, which said regulating devices regulate the power and the speed of revolution of the engine of the vehicle and, consequently, the speed of the vehicle.

Constant-speed regulators have become quite common in present-day motor vehicles. By means of these regulators, attempts are made to facilitate the driving performance by the driver so that the regulator keeps the speed of the vehicle at the desired level, whereby the driver can better concentrate on the driving performance itself and on observation of other traffic. Thus, e.g., the driver does not have to observe the speedometer all the time in order to avoid exceeding of speed limits. It is a common feature of the speed regulators in use at present that, when the regulator is supposed to be set at a certain speed, the vehicle must first be accelerated to this speed, whereupon the regulator is switched on, e.g., by pressing a knob. Hereinafter the regulator attempts to keep the speed of the vehicle at the desired level, within a certain range of variation. However, it is a common drawback of these devices that the speed regulator has only one memory position, in other words, only one desired speed can be set by it. Another drawback is that the desired speed value stored in the memory is lost from the memory when the engine is stopped and/or the ignition current is switched off.

One such constant-speed regulator is described in the US patent specification 3,949,359. In the system of the said specification, the desired speed is stored into the memory of the system in the way described above. The momentary factual speed of the vehicle is measured digitally. The system compares the desired speed of the vehicle and the momentary factual speed with each other and passes an error signal to the regulator, which, by the intermediate of actuating means, adjusts the fuel-air mixture of the vehicle motor so as to regulate the engine power and to adjust the factual speed of the vehicle to the same level with the desired speed. Thus, this device also involves the same drawbacks as were described above.

By means of the present invention, a decisive improvement is provided in respect of the drawbacks stated above. In view of accomplishing this, the device in accordance with the invention is characterized in that the memory unit of the constant-speed regulator, which has a permanent memory for the storage of the data stored in the memory unit in spite of possible interruption in the supply of ignition current, there are several memory positions for different constant speeds, which said set values of constant speeds, alone or together with an impulse concerning the driving gear that is desired, can be stored by means of the selector device into the memory unit and derived from the memory unit so as to form set values for the regulator.

Among the advantages of the invention should be mentioned, among other things, that the desired speed does not have to be adjusted every time separately, but a speed once set into the device remains in the memory of the device until it is separately erased from it. Another remarkable advantage is that several different speeds can be set into the device, which said speeds can be selected freely, e.g., in accordance with the applicable speed limits.

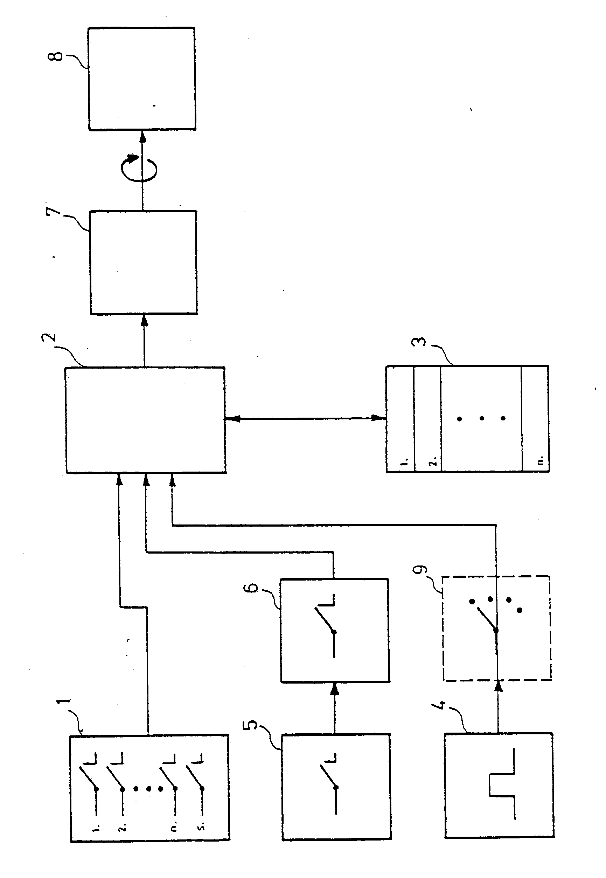

Next, the invention will be described in detail with reference to the attached drawing. The figure in the attached drawing shows the control system of the constant-speed regulator in accordance with the present invention schematically as a block diagram. The equipment includes a selector device 1, by means of which the desired constant speed is selected. The selector device consists of the keyboard unit 1 shown in the figure, which has n pieces of selector keys for different set speeds, as well as a setting knob s. By means of the keyboard unit, the electronic central unit 2 is controlled, in whose memory unit 3 there is a number of memory positions (n pieces) for different set speeds, corresponding to the selector keys. In the system, there is also a speed detector 4, which feeds the data on the factual speed of the vehicle to the central unit 2. Moreover, to the central unit 2, there are direct connections from the brake 5 as well as from the clutch 6. Moreover, in the figure it is shown by means of broken lines that, to the central unit 2, there may also be a direct connection from the gearbox 9, whereby, when the desired constant speed is selected, the information on the gear speed range used at that time is transmitted to the memory. Such a connection is, of course needed only when the vehicle has a manual gearbox. The central unit 2 controls the regulating motor 7, which, by means of the engine power adjustment mechanism 8, regulates the engine power and, thereby, the driving speed to the desired level.

The storing of the speeds into the memory 3 of the central unit is carried out so that the driver accelerates or slows down the vehicle to the desired speed, whereupon he presses one selector knob and the setting knob on the keyboard unit 1 at the same time. If the equipment has the said connection from the gearbox 9, the information on the gear speed range used at that time is, at the same time, stored in the memory 3. The speed and the information on the speed range in this way stored remain in the memory of the central unit 3 until such data are stored again in the way described above. Thus, ech set speed can be altered separately. The set speeds stored remain in the memory 3 of the central unit in spite of switching off of the ignition current of the vehicle. Thus, when he starts driving again, the driver just engages a forward gear and depresses the selector knob of the desired set speed, whereinafter the regulating motor 7, controlled by the electronic central unit 2, by means of the power adjustment mechanism 8, regulates the power of the vehicle engine and, thereby, the vehicle speed to the desired level.

In vehicles with a manual gearbox, the constant-speed regulator should preferably be provided with a warning device which signals an unduly low or high speed of rotation of the engine. Since, when the desired speed is stored in the memory 3, the information on the gear speed range 9 used at that time is also stored in the memory, it is preferable that, when the same speed is again being selected, the device notifies the driver of the necessity of changing the gear, if any. Such a system is advantageously connected together with the said warning device, whereby the device could, right on selection of the constant speed, e.g. by means of signal light symbols, indicate whether it is necessary to engage some other gear. Thus, the driver is notified by the device as to when he should engage a higher or lower gear. In the case of vehicles provided with automatic gearbox, no such warning device is needed.

When the vehicle moves from one desired driving speed to the other, e.g. when the speed limit changes or starts, the new speed is obtained by just depressing a knob, whereby the electronic central unit 2 considers the last knob information that was reported as the desired constant speed. This, of course, requires that the speeds concerned were set into the memory 3 of the unit earlier. Thus, after the driver has depressed one selector knob, the constant-speed regulator adjusts the driving speed to the level of the set speed that was last sorted by using the said selector knob, and it also keeps the speed at the same level. To the central unit 2, there are direct connections from the brake and from the clutch, so that the constant-speed regulator returns the control duty to the driver after he has depressed the brake or clutch pedal or the speed setting knob without touching any of the selector knobs. The regulator is also switched off in the case of acceleration, e.g. in connection with overtaking, whereby, after the overtaking, after the driver has lifted his foot off the gas pedal, the constant-speed regulator returns the speed of the vehicle to the same level at which it was before the acceleration situation.

Above, it was suggested that the driver could himself set the set speeds that he desires to the memory 3 of the central unit. Another possibility is, of course, that certain speeds are already set ready in the memory at the factory, whereby each knob in the keyboard unit 1 corresponds to a certain fixed set speed. Of course, it is also possible to arrange these set speeds so that they can be altered later in the way described above. It is quite an advantageous modification of the invention that the keyboard unit 1 shown in the figure is replaed by a potentiometer-type adjusting knob, whereby the desired set speeds can be selected by turning the adjusting knob in the same way as, e.g., the sound volume is adjusted on a radio.

The keyboard unit 1 might also be provided with an, e.g., digital display, which shows the set speed selected. The equipment might additionally be constructed in such a way that the storing of the set speeds into the memory 3 of the central unit 2 can be carried out when the vehicle is standing immobile. By pressing the set knob s, the numerical display of the display might be arranged as increasing from zero upwards (e.g., with a spacing of 5 or 10 km/h) so that, when the display shows the desired speed, a certain selector knob is depressed at the same time (simultaneously with the set knob), whereby the desired value of speed is transferred into the memory unit into the memory position determined by the selector knob.

Above, the invention is described as a so-called passive system, in which the driver himself must select the desired driving speed by means of the selector device. As an alternative modification might, however be conceived as so-called active system, in which the equipment is provided with a reader device, such as a radar or equivalent, which identifies the speed limit marks placed at the roadside. In such a case, in accordance with the impulses received from the reader device, the device could control the speed of the vehicle in accordance with the prevailing speed limit. Of course, such a system should also provide the possibility of by-passing this active system, because, owing to the traffic and weather conditions, the speed must often be considerably lower than the speed limit. A prerequisite for such a system would be that the speed limit marks should be coded in a specified way in order that they could be read by the device.

Above, the invention has been described with reference to a preferred exemplifying embodiment of same. This is, however, by no means supposed to confine the invention to this particular example only, but many variations are possible within the scope of the inventive idea defined in the following patent claims.

**Claims**

1. Constant-speed regulator for motor vehicles for keeping the speed of the vehicle at the desired level, which said constant-speed regulator comprises a selector device (1) for selecting the desired constant speed, a programmable central unit (2) with memory unit (3), into which the data are fed concerning the driving situation, such as the use of the clutch (6) and of the brake (5) as well as the momentary speed (4), and regulating devices (7,8) controlled by the central unit (2,3), which said regulating devices regulate the power and the speed of revolution of the engine of the vehicle and, consequently, the speed of the vehicle, characterized in that the memory unit (3) of the constant-speed regulator, which has a permanent memory for the storage of the data stored in the memory unit (3) in spite of possible interruption in the supply of ignition current, there are several memory positions for different constant speeds, which said set values of constant speeds, alone or together with an impulse concerning the drving gear (9) that is desired, can be stored by means of the selector device (1) into the memory unit (3) and derived from the memory unit (3) so as to form set values for the regulator.

2. Constant-speed regulator as claimed in claim 1, characterized in that to the memory unit (3) of the regulator, there is a connection from the gearbox of the vehicle, whereby, when a set value for constant speed is stored into the memory unit (3), information of the gear that is engaged at that time is also stored into the memory unit (3).

3. Constant-speed regulator as claimed in claim 1 or 2, characterized in that each set value of a constant speed stored in the memory unit (3) can be altered separately, independently from the other data stored in the memory unit (3).

4. Constant-speed regulator as claimed in claim 1, 2 or 3, characterized in that each set value of a constant speed can be selected from the memory unit (3) independently from the momentary driving situation and from the set value of the constant speed selected earlier.

5. Constant-speed regulator as claimed in any of the preceding claims, characterized in that the constant-speed regulator is provided with a warning device, which is connected to the connection between the memory unit (3) and the gearbox (9) so that it warns about an excessively low or excessively high speed of rotation of the engine and indicates possible necessity of changing the gear.

**Patentansprüche**

1. Regulator für konstante Geschwindigkeit für Motorfahrzeuge zum Halten der Geschwindigkeit des Fahrzeugs auf der gewünschten Höhe, welcher Regulator für konstante Geschwindigkeit umfaßt eine Wählvorrichtung (1) für das Auswählen der gewünschten konstanten Geschwindigkeit, eine programmierbare Zentraleinheit (2) mit Speichereinheit (3), welcher die die Fahrsituation betreffenden Daten zugeführt werden, wie die Benutzung der Kupplung (6) und der Bremse (5) wie auch die augenblickliche Geschwindigkeit (4), und durch die Zentraleinheit (2, 3) gesteuerte Regulierungsvorrichtungen (7, 8) welche Regulierungsvorrichtungen die Kraft und die Drehzahl des Motors des Fahrzeugs regulieren und damit die Geschgwindigkeit des Fahrzeugs, dadurch gekennzeichnet, daß in der Speichereinheit (3) des Regulators für konstante Geschwindigkeit, welche einen Permanentspeicher für die Speicherung der in der Speicherinheit (3) trotz möglicher Zufuhrunterbrechung des Zündstroms gespeicherten Daten Aufweist, verschiedene Speicherpositionen für unterschiedliche konstante Geschwindigkeiten vorgesehen sind, welche eingestellten Werte konstanter Geschwindigkeiten, allein oder zusammen mit einem Impuls betreffend das gewünschte Getriebe (9), mittels der Wählvorrichtung (1) in der Speichereinheit (3) gespeichert und aus der Speichereinheit (3) entnommen werden können um eingestellte Werte für den Regulator zu bilden.

2. Regulator für konstante Geschwindigkeit nach Anspruch 1, dadurch gekennzeichnet, daß zu der Speichereinheit (3) des Regulators eine Verbindung von dem Getriebegehäuse des Fahrzeugs besteht, wodurch, wenn ein eingestellter Wert für konstante Geschwindigkeit in der Speichereinheit (3) gespeichert wird, eine das im Eingriff befindliche Getriebe betreffende Information zu diesem Zeitpunkt ebenfalls in der Speichereinheit (3) gespeichert wird.

3. Regulator für konstante Geschwindigkeit nach Anspruch 1 oder 2, dadurch gekennzeichnet, daß jeder in der Speichereinheit (3) gespeicherte eingestellte Wert einer konstanten Geschwindigkeit getrennt verändert werden kann, unabhängig von den anderen in der Speichereinheit (3) gespeicherten Daten.

4. Regulator für konstante Geschwindigkeit nach Anspruch 1, 2 oder 3, dadurch gekennzeichnet, daß jeder eingestellte Wert einer konstanten Geschwindigkeit aus der Speichereinheit (3) unabhängig von der augenblicklichen Fahrsituation und von dem früher ausgewählten eingestellten Wert der konstanten Geschwindkeit ausgewählt werden kann.

5. Regulator für konstante Geschwindigkeit nach einem der vorausgehenden Ansprüche, dadurch gekennzeichnet, daß der Regulator für konstante Geschwindigkeit mit einer Warnvorrichtung versehen ist, welche an die Verbindung zwischen der Speichereinheit (3) und dem Getriebegehäuse (9) angeschlossen ist, so daß sie bei einer übermäßig niedrigen oder übermässig hohen Motordrehzahl warnt und eine mögliche Notwendigkeit des Getriebewechsels anzeigt.

**Revendications**

1. Un régulateur de vitesse constante pour véhicule automobile, permettant de maintenir la vitesse du véhicule à un niveau souhaité, ce régulateur de vitesse constante comprenant un sélecteur (1) permettant de choisir la vitesse constante souhaitée, une unité centrale programmable (2) avec une unité de mémoire (3) dans laquelle on introduit des données concernant les conditions de conduite, notamment l'utilisation de l'embrayage (6) et du frein (5) ainsi que la vitess instantanée (4), et des régulateurs (7, 8) commandés par l'unité centrale (2, 3), ces régulateurs permettant de réguler la puissance et la vitesse de rotation du moteur du véhicule et, par voie de conséquence, la vitesse de ce dernier, caractérisé en ce que l'unité de mémoire (3) du régulateur de vitesse constante, qui comprend une mémoire permanente pour la mémorisation des données chargées dans l'unité de mémoire (3) en dépit d'une interruption possible de l'alimentation du circuit d'allumage, comprend une pluralité de positions de mémoire pour différentes vitesses constantes, les valeurs de consigne des vitesses constantes pouvant être chargées dans l'unité de mémoire (3), seules ou en même temps qu'un signal correspondant au rapport de vitesse (9) souhaité, au moyen du sélecteur (1), et extraites de cette unité de mémoire (3) de manière à constituer les valeurs de consigne du régulateur.

2. Le régulateur de vitesse constante de la revendication 1, dans lequel l'unité de mémoire (3) du régulateur comprend une liaison à la boîte de vitesses du véhicule, l'information du rapport de vitesse en prise lorsqu'une valeur de consigne de vitesse constante est chargée dans l'unité de mémoire (3) étant également chargée dans l'unité de mémoire (3).

3. Le régulateur de vitesse constante de l'une des revendications 1 ou 2, dans lequel chaque valeur de consigne de vitesse constante chargée dans l'unité de mémoire peut être modifiée séparément, indépendamment des autres données chargées dans l'unité de mémoire (3).

4. Le régulateur de vitesse constante de l'une des revendications 1, 2 ou 3, dans lequel chaque valeur de consigne de vitesse constante peut être sélectionnée dans l'unité de mémoire (3) indépendamment des conditions de conduite instantanées et de la valeur de consigne de vitesse constante antérieurement choisie.

5. Le régulateur de vitesse constante de l'une des revendications précédentes, dans lequel le régulateur de vitesse constante est pourvu d'un appareil avertisseur, relié à la liaison de l'unité de mémoire (3) à la boîte de vitesse (9), permettant d'indiquer une vitesse de rotation du moteur excessivement faible ou excessivement élevée, en signalant éventuellement le besoin de changer de rapport.